# EUROPÄISCHE PATENTSCHRIFT

(11) **EP 1 900 284 B1**
(45) Veröffentlichungstag und Bekanntmachung des Hinweises auf die Patenterteilung: **03.06.2009**
(21) Anmeldenummer: 06019125.1
(22) Anmeldetag: 13.09.2006
(51) Int. Cl.: A23B 7/144, A23L 3/3418, B65D 81/20

(54) **Vorrichtung zur Erzeugung und Aufrechterhaltung einer künstlichen Atmosphäre in einem Lager- oder Transportbehälter**
Apparatus for generating and maintaining a controlled atmosphere in a storage or shipping container
Dispositif pour la création et le maintien d'une atmosphère régulée dans des conteneurs d'éxpedition où de stockage

(43) Veröffentlichungstag der Anmeldung: 19.03.2008
(73) Patentinhaber: Cargofresh AG, 22926 Ahrensburg (DE)
(72) Erfinder: Schallnus, Harald, Dr. Ing., 22359 Hamburg (DE)
(74) Vertreter: Meyer, Ludgerus

(56) Entgegenhaltungen:
- EP-A- 0 489 413
- EP-A2- 0 224 469
- DE-A1- 10 143 527

## Beschreibung

Die Erfindung betrifft eine Vorrichtung zur Erzeugung und Aufrechterhaltung einer künstlichen Atmosphäre in einem Lager- oder Transportbehälter, insbesondere für Lebensmittel, nach dem Oberbegriff des Anspruchs 1.

Es ist bekannt, zum Transport oder zur Lagerung von Lebensmitteln über einen längeren Zeitraum die Lebensmittel einer künstlichen Atmosphäre auszusetzen, in der der Stickstoffgehalt gegenüber einer normalen Atmosphäre beträchtlich erhöht ist. Dabei wird der Stickstoffgehalt auf bis zu 98% eingestellt, während der Sauerstoffgehalt auf etwa 2% reduziert wird, so dass die Lebensmittel quasi in einen Tiefschlaf versetzt werden und während der Lagerungszeit daher keiner Fäulnisbildung und Nachreife unterliegen. Üblicherweise werden die Lebensmittel zusätzlich gekühlt, wobei die Kühltemperatur von der Art des Lebensmittels abhängt.

Aus der DE 102 16 518 B4 sind ein Verfahren und eine Einrichtung zur Erzeugung einer künstlichen Atmosphäre in einem Lager- oder Transportbehälter bekannt, wobei ein Luftverdichter von außen zugeführte Druckluft über eine Gastrennmembran in den Lager- oder Transportbehälter zur Erzeugung einer künstlichen Atmosphäre mit erhöhtem Stickstoffanteil überführt. Der Feuchtegehalt der zugeführten Druckluft wird mittels einer Entfeuchtungsvorrichtung verringert. Als Entfeuchtungseinrichtung wird dort eine Entfeuchtungsmembran verwendet, wobei wenigstens ein Teil der in der Entfeuchtungsmembran aus der Druckluft ausgeschiedenen Feuchte dem Gasstrom, der aus der nachfolgenden Gastrennmembran abgeleitet wird, wieder hinzugeführt wird und damit in den Lager- oder Transportbehälter eingeführt wird.

Obgleich die Verwendung einer Entfeuchtungsmembran für diesen Zweck möglich ist, hat sich in der Praxis herausgestellt, dass eine solche Entfeuchtungsmembran relativ empfindlich ist und unter rauhen Einsatzbedingungen, wie sie im Transport auf Seeschiffen oder beim Containertransport auf Fahrzeugen auftritt, störanfällig ist. Ferner ist der apparatemäßige Aufwand zur Einstellung der Feuchte im Lager- oder Transportbehälter relativ hoch.

Es ist bekannt, dass der Wirkungsgrad einer Stickstoffmembran umso höher ist, je geringer die Feuchtigkeit des durch die Stickstoffmembran geführten Luftstroms ist. Durch den Einsatz der angegebenen Entfeuchtungsmembran lässt sich der Luftstrom zwar entfeuchten, jedoch reicht der Entfeuchtungsgrad einer Entfeuchtungsmembran nicht immer aus, die erforderliche Trockenheit des Gasstroms herzustellen.

Aus der DE 101 43 527 C2 ist eine Vorrichtung zur Konditionierung eines kontrollierten Atmosphärenvolumens bekannt, bei der zur Entfeuchtung der Druckluft statt einer Entfeuchtungsmembran ein Adsorptionstrockner verwendet wird. Aus einem zwischen einem Kompressor und dem Adsorptionstrockner eingeschalteten Zyklonabscheider wird Kondensat entnommen und über ein sich in dem Gasstrom von der Stickstoffmembran zum Behälter befindendes Nadelventil in den Behälter eingespeist.

Es hat sich gezeigt, dass der Gegenstand dieser Druckschrift nicht optimiert ist, da auch hierbei der Abscheidegrad für die Feuchtigkeit nicht besonders hoch ist und die Einrichtung nicht optimiert ist.

Schließlich zeigt auch die EP 0 489 413 A1 ein System zur Steuerung der Feuchtigkeit für einen Container mit kontrollierter Atmosphäre. Dort wird Feuchtigkeit aus komprimierter Luft abgeschieden, nachdem die Druckluft über einen regenerativen Wärmetauscher und einen Kühler geführt wurde. Die gekühlte Druckluft wird über einen Koaleszenzfilter und einen zweiten Filter im Gegenstrom durch den regenerativen Wärmetauscher geführt und dann weiter einem Separator, wie einem Molekularsieb oder einem Membranseparator zugeführt. In dem regenerativen Wärmetauscher wird die Druckluft wieder erwärmt, bevor sie dem Separator zugeführt wird.

Der Erfindung liegt die Aufgabe zugrunde, eine Vorrichtung zur Erzeugung und Aufrechterhaltung einer künstlichen Atmosphäre in einem Lager- oder Transportbehälter, insbesondere für Lebensmittel, anzugeben, welche einen hohen Abscheidungsgrad für Feuchtigkeit ermöglicht, einfach und robust aufgebaut ist und einfach steuerbar ist.

Diese Aufgabe wird durch die im Anspruch 1 angegebene Erfindung gelöst. Vorteilhafte Weiterbildungen der Erfindung sind in Unteransprüchen angegeben.

Die Erfindung geht gemäß Oberbegriff des Anspruchs 1 aus von einer Vorrichtung zur Erzeugung einer künstlichen Atmosphäre, welche eine Kältevorrichtung zur Kühlung des Innenraums des Behälters enthält, eine Stickstofferzeugungsvorrichtung zur Erzeugung eines erhöhten Stickstoffgehalts in der Atmosphäre des Behälters sowie einer Druckluftaufbereitungsvorrichtung, in der von außerhalb des Behälters zugeführte Umgebungsluft verdichtet, gereinigt und getrocknet wird. Die darin aufbereitete Luft wird über die Stickstofferzeugungsvorrichtung in ihrem Stickstoffgehalt erhöht und in den Behälter geführt. Die Druckluftaufbereitungsvorrichtung enthält dabei eine Hintereinanderschaltung eines Kompressors, eines Zyklonabscheiders und eines Adsorptionstrockners.

Erfindungsgemäß ist zwischen Kompressor und Zyklonabscheider eine erste Kühlvorrichtung zur Kühlung der Druckluft des Kompressors durch Außenluft eingeschaltet. Der ersten Kühlvorrichtung ist ferner eine zweite Kühlvorrichtung nachgeschaltet, welche sich im Behälter befindet. Der Adsorptionstrockner und die Stickstofferzeugungsvorrichtung befinden sich im Innenraum des Behälters, wobei ein Teil des in dem Zyklonabscheider oder an wenigstens einer der Kühlvorrichtungen abgeschiedenen Kondensats wahlweise in die Atmosphäre des Behälters überführbar ist.

Bei der Erfindung werden daher zwei Kühlvorrichtungen verwendet, nämlich eine erste Kühlvorrichtung, die dem Kompressor nachgeschaltet ist und die es ermöglicht, einen großen Teil des Kondensats über einen Zyklonabscheider ausscheiden zu lassen. Die zweite Kühlvorrichtung befindet sich im Behälter selbst, so dass sich damit eine erhebliche Reduzierung der Temperatur der Druckluft erreichen lässt, die zu einer weiteren Erhöhung des Wirkungsgrades des nachgeschalteten Adsorptionstrockners führt.

Dem Adsorptionstrockner ist vorzugsweise ein Staubfilter zur Reinigung der dem Adsorptionsfilter zugeführten Luft nachgeschaltet.

Vorzugsweise folgt den beiden Kühlvorrichtungen ein weiterer Zyklonabscheider, aus dem ebenfalls Kondensat ableitbar ist, oder ein Filter zur Abscheidung von Feinststaub und Aerosolen.

Bei der Abkühlung in der zweiten Kühlvorrichtung im Behälter entsteht an der Kühlvorrichtung selbst Kondensat, das aus dem im Behälter vorhandenen Lagergut stammt und das geeignet aufgefangen werden kann. Dieses Kondensat kann über eine Fördereinrichtung, z. B. eine Pumpe, wieder in den Behälter eingespritzt werden, um den Feuchtegehalt des Behälters relativ konstant zu halten. Das aus den Zyklonabscheidern abgegebene Kondensat wird vorzugsweise gereinigt und von Öl befreit, das insbesondere durch den Kompressor in die komprimierte Luft eingetragen wird. Es wird daher bevorzugt, nur das gereinigte Kondensat in die Behälteratmosphäre einzuspritzen. Die Menge des eingespritzten Kondensats hängt von der in dem Behälter erforderlichen Feuchte ab und kann mittels Sensor erfasst und geeignet eingestellt werden.

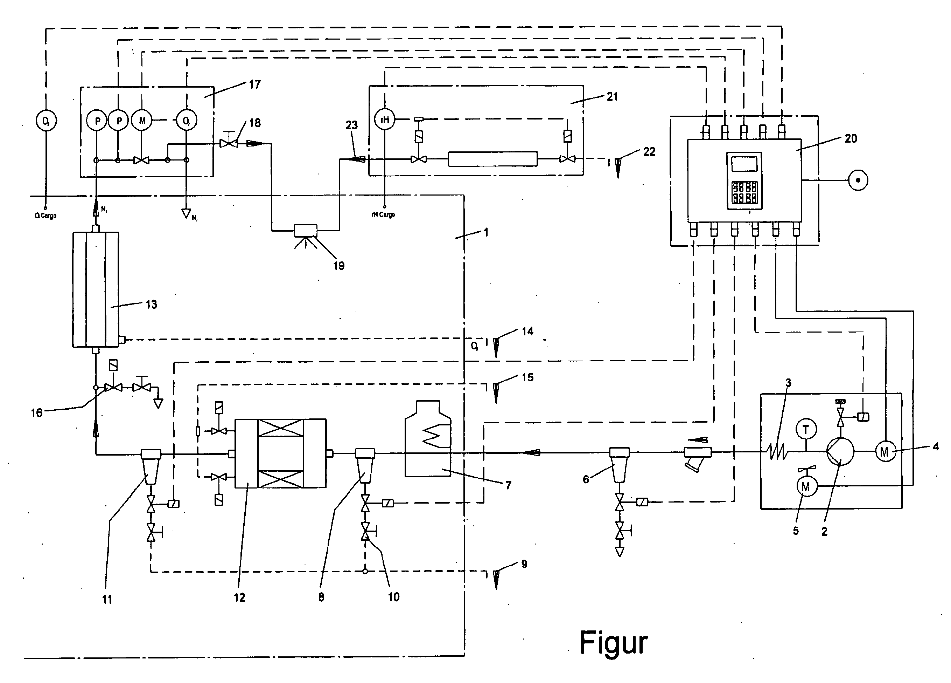

Die Erfindung wird nachstehend anhand eines Ausführungsbeispiels näher erläutert. Die einzige Figur zeigt eine schematische Ansicht einer Aufbereitungsanlage zur Herstellung einer künstlichen Atmosphäre in einem Transport- oder Lagerbehälter,

Die Figur zeigt schematisch einen Behälter 1, der z. B. ein Standardcontainer sein kann oder ein Auflieger auf einem LKW oder ein entsprechender Lager- oder Transportbehälter. Der Behälter 1 enthält eine nicht dargestellte Kältevorrichtung, die zur Kühlung der im Container gelagerten oder transportierten Lebensmittel dient. Die durch die Kältevorrichtung eingestellte Temperatur im Inneren des Containers beträgt z. B. 2 - 8°C.

Dem Behälter 1 ist ferner eine Stickstofferzeugungsvorrichtung zugeordnet, über die eine künstliche Atmosphäre im Behälter hergestellt wird, indem der Stickstoffgehalt z. B. auf 98% angehoben wird. Diese Einrichtung wird nun im Einzelnen beschrieben:

Zur Erzeugung der Stickstoffatmosphäre wird von außerhalb des Behälters zugeführte Umgebungsluft in einem Kompressor 2 verdichtet und in einer ersten Kühlvorrichtung 3 gekühlt. Der Kompressor 2 wird über den Kompressormotor 4 angetrieben. Bei der ersten Kühlvorrichtung 3 handelt es sich um eine Luftkühlung mittels Außenluft über den ersten Lüfter 5. Die verdichtete und gekühlte Außenluft wird nun über einen (ersten) Zyklonabscheider 6 geführt, in dem Kondensat abgeschieden und nach außen abgeleitet wird. Das Kondensat bzw. die Druckluft können durch Einschaltung von nicht gezeigten Filtern weiter gereinigt werden, insbesondere, wenn der Ölgehalt der Druckluft zu groß ist.

Die den Zyklonabscheider 6 verlassende Druckluft wird nun einer zweiten Kühlvorrichtung 7 zugeführt, die sich im Inneren des Behälters 1 befindet. Die Kühlung erfolgt mittels der Umgebungsluft der Kühlvorrichtung 7, d.h. der sich im Container 1 befindenden bereits gekühlten Atmosphäre. Durch die dadurch erhaltende Temperaturdifferenz zwischen Drucklufttemperatur und Kühllufttemperatur ergibt sich ein besonders hoher Wirkungsgrad der Kühlung der Druckluft. Auch die zweite Kühlvorrichtung wird mittels eines Ventilators gekühlt.

Der zweiten Kühlvorrichtung 7 folgt entweder ein zweiter Zyklonabscheider 8, dessen abgeschiedenes Kondensat über ein Ventil 10 und einen Abfluss 9 abgeleitet werden kann, oder ein Feinfilter, das der Abscheidung von Partikeln, und/oder auch Tröpfchen dient, und als Filterpatrone ausgeführt sein kann.

Die Kühlluft wird nun über einen Adsorptionstrockner 12 geleitet, in dem die Druckluft weiter getrocknet wird. Das in dem Adsorptionstrockner abgeschiedene Kondensat wird über den Auslass 15 abgegeben. Dem Adsorptionstrockner 12 kann noch ein dritter Zyklonabscheider 11 nachgeschaltet sein, dessen Kondensat ebenfalls ventilgesteuert über den Abfluss abgegeben werden kann. Die den Zyklonabscheider 11 verlassende Druckluft wird nun einer Stickstoffmembran 13 zugeführt. Anstelle des Zyklonabscheiders 11 kann auch ein Feinst- oder Mikrofilter zur Abscheidung von Feinststaub und Aerolosen verwendet werden, der auch als Filterpatrone ausgeführt sein kann.

Das die Stickstoffmembran 13 verlassende 0₂-Gas wird über den Auslass 14 an die Atmosphäre abgegeben. Die die Stickstoffmembran 13 verlassende Restatmosphäre mit erhöhtem N₂-Gehalt durchläuft nun eine Armaturengruppe 17 und wird in den Behälter 1 eingeleitet. Nach Verstreichen einer gewissen Initialisierungsphase stellt sich dann im Behälter 1 eine künstliche Atmosphäre ein, die ca. 98% Stickstoff und ca. 2% Sauerstoff enthält.

Zur Einstellung und Erhaltung des Feuchtegehalts der künstlichen Atmosphäre wird über eine Düse 19, die sich im Behälter 1 befindet, über eine Befeuchtungsanlage 21 Feuchtigkeit zugeführt. Die Feuchtigkeit wird über den Einlass 22 aus den Kondensatabläufen der Zyklonabscheider 6 und/oder 8, 11 sowie des Adsorptionstrockners 12 über die Auslässe 15 und 9 gewonnen. Ferner kann das an der zweiten Kühlvorrichtung 7 anfallende Kondensat, das z. B. durch regelmäßiges Abtauen von Eis gewonnen wird, ebenfalls aufgefangen und über die Befeuchtungseinrichtung in den Container 1 zurückgeführt werden.

Aus dem über die Armaturengruppe 17 geführten Stickstoffstrom wird über das Ventil 18 gesteuert ein Teilvolumen der Düse 19 geführt, der andererseits die aus dem Auslass 23 der Befeuchtungseinrichtung 21 abgegebene Feuchte zugeführt wird, so dass die Düse 19 die zugeführte Feuchtigkeit im Behälter 1 zerstäubt.

Die Einrichtung lässt sich auch zur Einstellung des CO₂-Gehalts im Behälter verwenden. Zu diesem Zweck ist ein Regelventil 16 vorgesehen, über das Frischluft aus der zur Stickstoffmembran 13 führenden Leitung ausgekoppelt werden kann, die dann in den Behälter 1 überführt wird. Das Regelventil kann als analoges Proportionalventil ausgebildet sein.

Dem Behälter wird damit steuerbar Stickstoff und Frischluft zugeführt, so dass hierdurch das Verhältnis Stickstoff zu CO₂ steuerbar wird. Der bei der Zugabe von Frischluft höher werdende Anteil von O₂ im Behälter lässt sich durch höhere Stickstoffzufuhr wieder ausregeln.

Insgesamt ermöglicht es diese Anmeldung auf einfache Weise, N₂, O₂ und CO₂ zu steuern und bei Vorhandensein von entsprechenden Sensoren und Stellgliedern auch zu regeln.

Dieses Verfahrensprinzip ist insbesondere beim Transport von Gütern mit hoher Respirationsrate verwendbar. O₂ und CO₂ können dabei auf beliebige Werte zwischen 3 und 10% eingestellt werden.

Sofern es für bestimmte Anwendungsfälle erforderlich ist, kann optional zusätzlich CO₂ aus mitgeführten Flaschen oder über andere an sich bekannte CO₂-Erzeugungseinrichtungen, wie über einen CO₂-Scrubber, der aus Dieselabgasen CO₂ ausfiltert, in den Behälter eingespeist werden.

Mittels eines Steuergeräts 20 können die verschiedenen Komponenten der Vorrichtung gesteuert, geregelt und eingestellt werden. Insbesondere werden über das Steuergerät 20 der Kompressor, die Ablaufventile der Zyklonabscheider und die Armaturengruppe 17 gesteuert. Das Steuergerät dient ferner zur Einstellung des Stickstoffgehalts, des Sauerstoffgehalts und der Feuchtigkeit im Container 1. Hierzu weist die Armaturengruppe 17 entsprechende Messgeräte und Einstellventile auf. Neben dem Stickstoff- und Sauerstoffgehalt sowie der Feuchte im Behälter 1 kann auch der CO₂-Gehalt gesteuert werden.

Um den Wirkungsgrad der gesamten Vorrichtung zu verbessern, befinden sich die Arbeitsgruppen zweiter Wärmetauscher 7, zweiter Zyklonabscheider 8, Adsorptionstrockner 12, dritter Zyklonabscheider 11 und die Stickstoffmembran 13 innerhalb des Behälters 1, vorzugsweise in einem abgetrennten Abteil, das allerdings im Luftaustausch mit dem übrigen Behälterraum steht. Damit können diese Vorrichtungen in einer gekühlten Atmosphäre laufen, so dass sie mit erhöhtem Wirkungsgrad arbeiten und keine eigenständige Kühlung erfordern.

### Bezugszeichen

- 1: Behälter
- 2: Kompressor
- 3: erste Kühlvorrichtung
- 4: Kompressormotor
- 5: erster Lüfter
- 6: Zyklonabscheider
- 7: zweite Kühlvorrichtung
- 8: zweiter Zyklonabscheider
- 9: Abfluss
- 10: Ventil
- 11: dritter Zyklonabscheider
- 12: Adsorptionstrockner
- 13: Stickstoffmembran
- 14: O₂-Auslass
- 15: Kondensatauslass
- 16: Regelventil
- 17: Armaturengruppe
- 18: Ventil
- 19: Düse
- 20: Steuergerät
- 21: Befeuchtungsanlage
- 22: Einlass
- 23: Auslass

## Patentansprüche

1. Vorrichtung zur Erzeugung und Aufrechterhaltung einer künstlichen Atmosphäre in einem Lager- oder Transportbehälter (1), insbesondere für Lebensmittel, mit einer Kältevorrichtung zur Kühlung des Innenraums des Behälters, mit einer Stickstofferzeugungsvorrichtung (13) zur Erzeugung eines erhöhten Stickstoffgehalts in der Atmosphäre des Behälters (1), sowie einer Druckluftaufbereitungsvorrichtung, in der von außerhalb des Behälters zugeführte Umgebungsluft verdichtet, gereinigt und getrocknet wird und die derart aufbereitete Luft über die Stickstofferzeugungsvorrichtung (13) in den Behälter geführt wird, wobei die Druckluftaufbereitungsvorrichtung eine Hintereinanderschaltung eines Kompressors (2), eines Zyklonabscheiders (6) und eines Adsorptionstrockners (12) aufweist, **dadurch gekennzeichnet, dass** zwischen Kompressor (2) und Zyklonabscheider (6) eine erste Kühlvorrichtung (3) zur Kühlung der Druckluft des Kompressors (2) mit Außenluft eingeschaltet ist, dass der ersten Kühlvorrichtung (3) eine zweite Kühlvorrichtung (7) nachgeschaltet ist, welche sich zur Kühlung der Druckluft durch die Behälteratmosphäre im Behälter (1) befindet, und dass der Adsorptionstrockner und die Stickstofferzeugungsvorrichtung sich im Innenraum des Behälters befinden, wobei ein Teil des in dem Zyklonabscheider oder an wenigstens einer der Kühlvorrichtungen (3, 7) abgeschiedenen Kondensats wahlweise in die Atmosphäre des Behälters (1) überführbar ist.

2. Vorrichtung nach Anspruch 1, **dadurch gekennzeichnet, dass** dem Adsorptionstrockner (12) ein Staubfilter zur Reinigung der durch den Adsorptionstrockner (12) geführten Luft nachgeschaltet ist.

3. Vorrichtung nach Anspruch 1 oder 2, **dadurch gekennzeichnet, dass** zwischen zweiter Kühlvorrichtung und Adsorptionstrockner ein Staub- und/oder Tröpfchenabscheider, insbesondere ein zweiter Zyklonabscheider (8), angeordnet ist.

4. Vorrichtung nach Anspruch 1, 2 oder 3, **dadurch gekennzeichnet, dass** dem Kondensatablauf des ersten (6) und/oder zweiten Zyklonabscheiders (8) ein Filter zur Reinigung des Kondensats vor dessen Einleiten in den Behälter nachgeschaltet ist.

5. Vorrichtung nach einem oder mehreren der vorhergehenden Ansprüche, **dadurch gekennzeichnet, dass** an der zweiten Kühlvorrichtung abgeschiedenes Kondensat über eine Fördereinrichtung in die Atmosphäre des Behälters überführbar ist.

6. Vorrichtung nach Anspruch 5, **dadurch gekennzeichnet, dass** die Fördereinrichtung eine Pumpe ist, die das an der zweiten Kühlvorrichtung abgeschiedene Kondensat auf eine steuerbare Einspritzdüse zur Einleitung des Kondensats in die Atmosphäre des Behälters überführt.

7. Vorrichtung nach einem der mehreren der vorhergehenden Ansprüche, **dadurch gekennzeichnet, dass** aus der in den Behälter (1) eingeführten Atmosphäre ein steuerbarer Teil abgeschieden und zusammen mit aus einem der Zyklonabscheider oder einer Kühlvorrichtung abgeschiedenen Kondensat über eine Spritzdüse (19) gesteuert und/oder geregelt in den Behälter (1) geführt wird.

8. Vorrichtung nach einem oder mehreren der vorhergehenden Ansprüche, **dadurch gekennzeichnet, dass** ein Teil der der Stickstofferzeugungsvorrichtung zugeführten Druckluft über ein Regelventil (16) in den Behälter (1) überführbar ist.

## Claims

1. Apparatus for generating and maintaining an artificial atmosphere in a storage or transport container (1), in particular for food, with a refrigerating apparatus for cooling the interior of the container, with a nitrogen generating apparatus (13) for generating an increased nitrogen content in the atmosphere of the container (1), as well as a compressed air preparation apparatus in which ambient air which is supplied from outside of the container is compressed, cleaned and dried, and the air which is thus prepared is conveyed via the nitrogen generating apparatus (13) into the container, wherein the compressed air preparation apparatus comprises a series connection of a compressor (2), a cyclone separator (6) and an adsorption dryer (12), **characterised in that** a first cooling apparatus (3) for cooling the compressed air of the compressor (2) with outside air is connected between the compressor (2) and the cyclone separator (6), that a second cooling apparatus (7) is connected downstream of the first cooling apparatus (3), which second cooling apparatus is located in the container (1) for cooling the compressed air through the container atmosphere, and that the adsorption dryer and the nitrogen generating apparatus are located in the interior of the container, wherein a portion of the condensate which is separated in the cyclone separator or at least at one of the cooling apparatus (3, 7) can optionally be transferred into the atmosphere of the container (1).

2. Apparatus according to Claim 1, **characterised in that** a dust filter for cleaning the air which is conveyed through the adsorption dryer (12) is connected downstream of the adsorption dryer (12).

3. Apparatus according to Claim 1 or 2, **characterised in that** a dust and/or droplet separator, in particular a second cyclone separator (8), is disposed between the second cooling apparatus and the adsorption dryer.

4. Apparatus according to Claim 1, 2 or 3, **characterised in that** a filter for cleaning the condensate before it is introduced into the container is connected downstream of the condensate outlet of the first (6) and/or second cyclone separator (8).

5. Apparatus according to one or more of the preceding Claims, **characterised in that** condensate which is separated at the second cooling apparatus can be transferred via a delivery device into the atmosphere.

6. Apparatus according to Claim 5, **characterised in that** the delivery device is a pump which transfers the condensate which is separated at the second cooling apparatus to a controllable injection nozzle for introducing the condensate into the atmosphere of the container.

7. Apparatus according to one of the plurality of preceding Claims, **characterised in that** a controllable portion is separated from the atmosphere which is introduced into the container (1) and, together with condensate which is separated from one of the cyclone separators or a cooling apparatus, is conveyed via a spray nozzle (19) into the container (1) in a controlled and/or regulated manner.

8. Apparatus according to one or more of the preceding Claims, **characterised in that** a portion of the compressed air which is supplied to the nitrogen generating apparatus can be transferred via a regulating valve (16) into the container (1).

## Revendications

1. Dispositif pour produire et maintenir une atmosphère artificielle dans un conteneur de stockage ou de transport (1), en particulier pour des aliments, comportant un dispositif de réfrigération pour réfrigérer l'intérieur du conteneur, un générateur d'azote (13) pour produire une teneur en azote accrue dans l'atmosphère du conteneur (1), et un dispositif de préparation d'air comprimé dans lequel l'air ambiant amené de l'extérieur du conteneur est comprimé, purifié et séché et l'air ainsi préparé est amené dans le conteneur par l'intermédiaire du générateur d'azote (13), le dispositif de préparation d'air comprimé comportant un compresseur (2), un séparateur à cyclone (6) et un sécheur par adsorption (12) montés en série, **caractérisé en ce qu'**il est prévu, monté entre le compresseur (2) et le séparateur à cyclone (6), un premier dispositif réfrigérant (3) destiné à réfrigérer l'air comprimé du compresseur (2) avec l'air extérieur, **en ce qu'**il est prévu, monté en aval du premier dispositif de réfrigération (3), un second dispositif de réfrigération (7) qui se trouve dans le conteneur (1) pour réfrigérer l'air comprimé à l'aide de l'atmosphère dudit conteneur (1), et **en ce que** le sécheur à adsorption et le générateur d'azote se trouvent à l'intérieur du conteneur, une partie du condensat séparé dans le séparateur à cyclone ou au niveau de l'un au moins des dispositifs de réfrigération (3, 7) pouvant être amené sélectivement dans l'atmosphère du conteneur (1).

2. Dispositif selon la revendication 1, **caractérisé en ce qu'**il est prévu, en aval du sécheur à adsorption (12), un filtre à poussière pour purifier l'air qui passe dans le sécheur à adsorption (12).

3. Dispositif selon la revendication 1 ou 2, **caractérisé en ce qu'**il est prévu, entre le second dispositif de réfrigération et le sécheur à adsorption, un séparateur de poussière et/ou un dévésiculeur, en particulier un second séparateur à cyclone (8).

4. Dispositif selon la revendication 1, 2 ou 3 **caractérisé en ce qu'**il est prévu, monté en aval de l'écoulement de condensat des premier (6) et/ou second séparateurs à cyclone (8), un filtre pour purifier le condensat avant l'entrée de celui-ci dans le conteneur.

5. Dispositif selon l'une au moins des revendications précédentes, **caractérisé en ce que** le condensat séparé au niveau du second dispositif de réfrigération est apte à être transféré dans l'atmosphère du conteneur par l'intermédiaire d'un dispositif de refoulement.

6. Dispositif selon la revendication 5, **caractérisé en ce que** le dispositif de refoulement est constitué par une pompe qui amène le condensat séparé au niveau du second dispositif de réfrigération jusqu'à un injecteur apte à être commandé qui est destiné à introduire ledit condensat dans l'atmosphère du conteneur.

7. Dispositif selon l'une au moins des revendications précédentes, **caractérisé en ce qu'**une partie, apte à être commandée, de l'atmosphère introduite dans le conteneur (1) est séparée et est amenée dans le conteneur (1), avec une commande et/ou une régulation par l'intermédiaire d'un injecteur (19), avec le condensat séparé à partir de l'un des séparateurs à cyclone ou d'un dispositif de réfrigération.

8. Dispositif selon l'une au moins des revendications précédentes, **caractérisé en ce qu'**une partie de l'air comprimé amené dans le générateur d'azote est apte à être amenée dans le conteneur (1) par l'intermédiaire d'une soupape de régulation (16).
